# EUROPEAN PATENT APPLICATION

(11) **EP 1 280 044 A2**
(43) Date of publication of application: **29.01.2003**
(21) Application number: 02079313.9
(22) Date of filing: 24.10.1995
(51) Int. Cl.: G06F 1/32

(54) **Network hibernation system**

(30) Priority: 25.10.1994 KR 9427299
(62) Divisional of application: 95307555.3
(71) Applicant: SAMSUNG ELECTRONICS CO., LTD., Suwon, Kyunggi-do 442-742 (KR)
(72) Inventor: Park, Noh-byung, dong, Seocho-gu, Seoul (KR); Lee, Sang-jin, Suwon-shi, Kyonggi-do (KR); Cho, Shung-hyun, Paldal-gu, Suwon-shi, Kyonggi-do (KR); Choi, Jong-sung, Kyonggi-do (KR)
(74) Representative: Cardwell, Stuart Martin

(57) **Abstract**

In a network hibernation system which comprises a power controller (2) which outputs time-out signal when the event does not occur in the peripheral equipment for sometime; a power
supply (3) for backing up of data which outputs a power interruption detection signal when the power supply is cut off with the power supplied urgently by the battery (34) and cuts off the power of battery when the power interruption signal is inputted; a controller (1) which backs up data in network environment and
thereafter,outputs the power interruption signal when the power interruption detection signal or the time-out signal is inputted and recovers the data and environment backed up
on the memory so that the computer may operate in the same state as the former state; a network interface (4)for the network connection; a supplementary memory (5)in which the data for backing up the hardware state or the working environment are stored in the computer; and a memory (6) in which the hibernation information is stored, and recovers the working environment to the former state when the power is cut off abruptly in the network environment and thereafter, the power is turned on again and also, interrupts the power automatically when the computer is not used for sometime and thereafter, recovers the working environment to the former state when the power is applied again so that the consumed power may be saved, a process comprising the steps of estimating whether the network hibernation is enabled and consequently loading the network hibernation module.

## Description

This invention relates to a network hibernation system, particularily to a network hibernation system in which a working environment can be recovered to a former state when a power supply is applied again after the power supply was cut off abruptly in a computer in network environment and also,the power supply is cut off automatically when the computer is not used for sometime and the working environment is recovered to the former state when a user applies a power supply to the computer again.

In this invention, the hibernation system means a system including two functions as follows: firstly, an emergent automatic recovering function in which working conditions are stored in a supplimentary memory device such as a hard disk when the power supply is cut off abruptly by the interruption of electric power or any mistake of a user and thereafter, the state before the cutting off of the power supply is recovered by using the stored content in the supplementary memory device when the power supply is applied to the computer again; secondly, a power saving function in which when the computer is not used for a given time while using the computer, the power supply is cut off automatically after the working condition is stored in a supplimentary memory device such as a hard disk and thereafter, the working environment is recovered to the state before the cutting off of the power supply by the content of the supplimentary memory when the power supply is applied to the computer again.

And also, in this invention, the network hibernation system means the system which supports the hibernation system when the computer is used in the network environment.

The phrase 'in the network environment' means the state in which a user uses the computer in connection with a network.

Recently, in personal computers, the hibernation system having the emergent automatic recovering function and the power saving function has been gradually popularized and its market has also been expanded.

The similar prior arts relating to the emergent automatic recovering function and power saving function according to the invention are as shown in an an invention filed under Korea Patent Application No.93-31255 entitled "The supplimentary power supply for backing up the working environment in an emergency," filed on December 30, 1993, Korea Patent Application No.94-13919 entitled "The stop clock controlling machine," filed on June 20, 1994. Korea Utility Model Application No. 93-3116 entitled "The power controlling device of the computer peripheral equipment," filed on March 4, 1993. Korea Patent Application No.92-14590 entitled "The circuit generating the power interruption signal in the computer peripheral equipment," filed on August 13, 1992.

But the technology specified in the prior arts suffers drawbacks that in network environment, particularily in PC (personal computer) LAN (Local Area Network) environment, when the power supply is cut off by the abrupt interruption of electric power or any fault of a user when using the computer, the data can be recovered only in a state independent of a network environment, otherwise, the data is lost.

It is an object of this invention to provide a system in which when the power supply is cut off by the abrupt interruption of electric power or any fault of a user while using the computer, the working environment is recovered to the former state after the power supply is turned on again, and in network environment, when the computer is not used for a given time, the power supply is cut off automatically and the working environment is recovered to the former state when the power supply is turned on again, so that the electric power consumed may be minimized.

To achieve the object of this invention, a hibernation system according to an embodiment of this invention comprises a power controller for outputing time-out signal when an event does not occure for a given time in the peripheral equipment; a power supply for backing up of data which outputs the power interruption detection signal when the power supply is cut off by the abrupt interruption of electric power or any fault of a user with the power supplied urgently by a battery and also, cuts off the power supply when a power interruption signal is applied; a controller which places the computer in the hibernation state by outputting the power interruption signal after data is backed up in the network environment when the power interruption detection signal is inputted from the power controller or the time-out signal is inputted from the power supply and also, operates the computer in the former network environment by recovering the backed-up data and the working environment when the power is applied again; a network interface for network connection; a supplimentary memory in which the hardware state of the computer and the data for backing up of the working environment are stored; and a memory in which some hibernation information are stored.

As to the means to accomplish the object of the invention, the loading method of the network hibernation module of the invention comprises an initializing step in which the network interface is initialized when the operation is begun; a disabling step in which the event signal is disabled in a mask register when the network hibernation is enabled after it is estimated whether the network hibernation is enabled; a storing step in which the network interface information is stored in the network hibernation information area in the memory; a storing step in which the information representing the fact that the network hibernation module is loaded in the system and the interrupt information in the network hibernation module or address are stored in the memory; a loading step in which a process routine of the network driver is loaded in the memory; and a step in which the network hibernation module is loaded in the memory when the network hibernation is enabled after it is estimated whether the network hibernation is enabled and thereafter, the operation is terminated.

To accomplish the object, a suspend method of the invention comprises: a step in which the power supply for backing up of data outputs an AC(alternating current) interruption detection signal with the power of battery applied; a step in which the power controller outputs the time-out signal when the event has not been occurred for sometime during the operation of the computer; a step in which the hibernation interrupt occurs in CPU and thereafter, it is estimated whether the hibernation supporting network driver is installed when the AC interruption detection signal and the time-out signal occur; a step invoking network hibernation module in case the hibernation support network driver is installed; a step resetting the network interface in case it is estimated whether the network hibernation is enabled and then determined to be enabled; a step disabling the network interface and returning to the hibernation module after the content of local memory is stored in case there is the local memory in the network interface; a step storing all the content in memory to the supplimentary memory after the entire state of hardware in the present computer are stored; a step interrupting the power with the power supply for backing up of data by outputting the power-off signal to the power supply for backing up of data; and a step turning the computer to the hibernation state.

As a means to accomplish the object of the invention, the resuming method of this invention comprises a step initializing and self-examining the computer when the power is applied again in the state of power-off; a step recovering the working environment to the state previous to the power-off by normally booting in case it is not the hibernation mode and by recovering all the content of memory from the supplimentary memory in case it is the hibernation mode after it is estimated whether the hibernation mode; a step invoking the network hibernation module in case of the network hibernation state after it is estimated whether it is the network hibernation state; a step initializing the network interface in case the network hibernation is enabled after it is estimated whether the network hibernation is enabled if the network hibernation module is invoked; a step recovering the content of local memory in case that there is local memory in the network interface and resetting the network interface; a step returning to the hibernation module after the network interface is enabled; and a step operating the computer in the previous state to the hibernation.

An embodiment of the present invention will now be described, by way of example only, with reference to the accompanying drawings, wherein:-
FIG. 1 is a block diagram showing the network hibernation system according to a preferred embodiment of the invention;
FIG. 2 is a block diagram showing the power supply for backing up of data in the hibernation system according to a preferred embodiment of the invention;
FIG. 3 is a block diagram showing the power controller in the network hibernation system according to a preferred embodiment of the invention;
FIG. 4 is a block diagram showing the network interface in the network hibernation system according to a preferred embodiment of the invention;
FIG. 5 is a flowchart of the loading process to the network hibernation module according to a presently preferred embodiment of the invention;
FIG. 6 is a flowchart of the suspend process to the hibernation module according to a preferred embodiment of the invention;
FIG. 7 is a flowchart the suspend process to the network hibernation module according to a presently preferred embodiment of the invention;
FIG. 8 is a drawing showing the state in which the network hibernation module is invoked in case of power-off according to a preferred embodiment of the invention;
FIG. 9 is a flowchart to the resume process of the hibernation module according to a preferred embodiment of the invention;
FIG. 10 is a flowchart to the resume process of the network hibernation module according to a preferred embodiment of the invention;
FIG. 11 is a drawing showing the state in which the network hibernation module is invoked in case of booting according to a preferred embodiment of the invention;
FIG. 12 is a drawing showing the memory map of RAM and ROM in the network hibernation system according to a preferred embodiment of the invention; and
FIG. 13 is a drawing showing the memory map of the RAM and ROM in the network hibernation system according to a preferred embodiment of the invention.

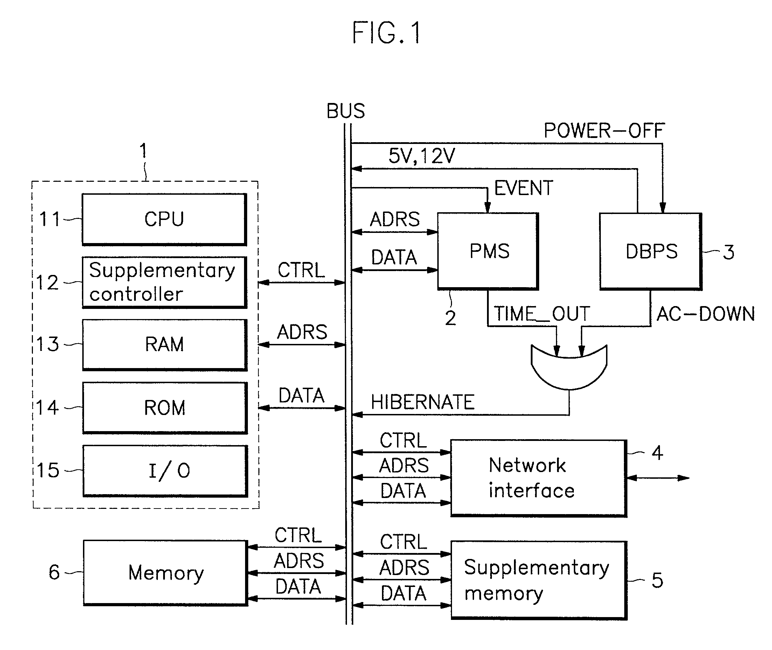

As shown in Fig. 1, the network hibernation system according to an embodiment of the invention comprises controller 1, power controlling part 2 which is connected to bus power supply 3 for backing up of data which is connected to bus, network interface 4, supplimentary memory 5, and nonvolatile memory 6.

The controller 1 comprises CPU (central process unit) 11, supplimentary controller 12, RAM 13, ROM 14, I/O (input/output) 15, the supplimentary controller meaning bus controller, DMA controller, interrupt controller, etc.

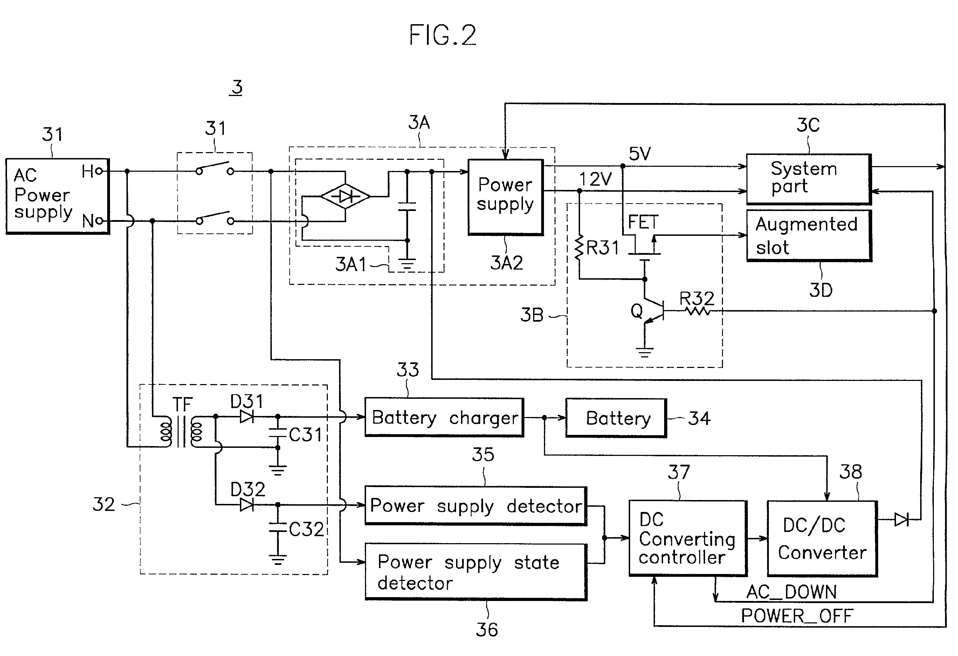

As shown in FIG.2, the power supply 3 for backing up of data in the network hibernation system according to an embodiment of the invention comprises an AC (alternating current) power supply 31; a linear converting rectifier 32 which is composed of a transformer (TF) is connected to the two output terminals of the AC rectifier 31 and diodes (D31, D32) and condensors (C31, C32) connected to the output terminals of the TF; a battery 34 and a battery charger 33 which are cascaded into the linear converting rectifier 32; a power supply state detector 36 which is connected to the output terminal of the linear converting rectifier 32; a power supply switching state detector 36; a DC (direct current) converting controller 37 to which the output signals of the power supply detector 35 and the power supply switching state detector 37 are inputted and the power supply interruption detecting signal to system part 3C and the power supply signal are applied; a DC/DC converter 38 which is connected to the output terminals of the battery charger 33 and the DC converting controller 37 and of which output terminal is connected to the output terminal of the bridge rectifier 3A1 in the main power supply 3A through two diodes; a main power supply 3A of which the output terminal of the AC power supply 31 is connected to the bridge rectifier 3 A1 through power switch 39 and the output terminal of the bridge rectifier 3A1 is connected to power supply 3A2; and an augmented slot interrupter 3B of which the output terminal of the DC converting controller 37 to output the back up starting signal of the working environment of the DC controller 37 is connected to a base of a transistor Q through resistor R32 and a gate of a field effect transistor FET and the 12 volt output terminal of the power supply 3A2 are connected to the colletor of the transistor TR and the 5 volt output terminal of the power supply 3A2 is connected to the drain of the FET and the source of the FET is connected to the augmented slot 3D.

The technic of the power supply 3 for backing up data is as shown in the above mentioned patent application No. 93-31255, entitled ""The supplimentary power supply for backing up the working environment in an emergency."

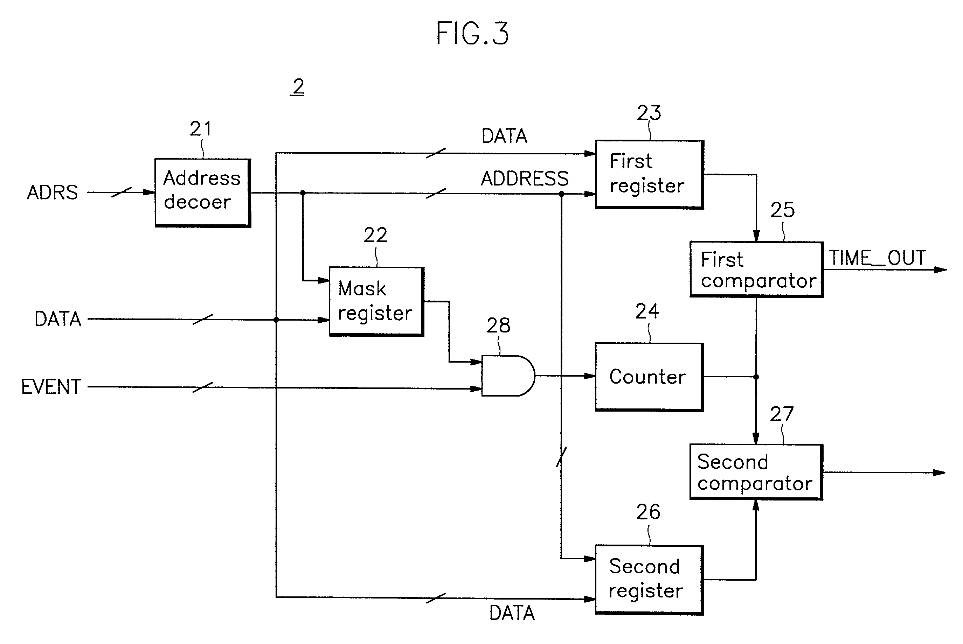

As shown in Fig. 3, the power controller means 2 in the network hibernation system according to an embodiment of the invention comprises an address decoder 21 which is connected to the address bus; a mask register 22, the first and the second registers 23, 26 which are connected to the data bus and the address decoder 21, respectively; an AND gate of which input terminal is connected to the first mask register 22 and event signal line; a counter of which input terminal is connected to the output terminal of the AND gate; a first comparator 25 which is connected to the output terminals of the first time register 23 and counter 24; and a second comparator which is connected to the output terminals of the second time register 26 and counter 24.

In the embodiment of the invention, the power controller means 2 composed of the elements as shown in FIG. 3 is described, but the technical range of the invention is not restricted to this and also the power controller means 2 can be realized by the technic shown in the Korean patent application No 92-14590, entitled "The circuit producing the power interruption signal in the computer peripheral equipment."

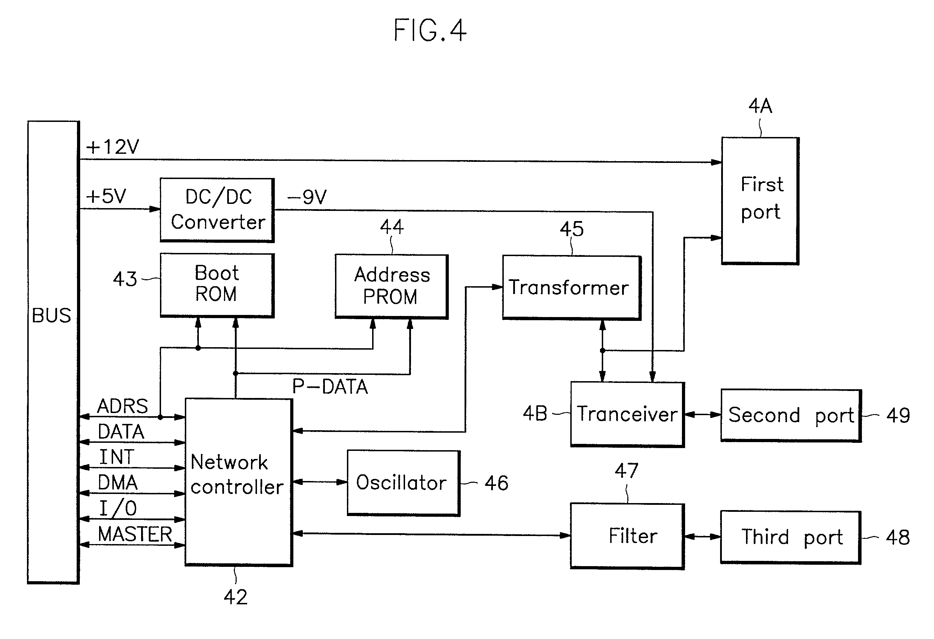

As shown in FIG.4, the network interface 4 in the network hibernation system according to an embodiment of the invention comprises a DC/AC converter 41 which is connected to bus; a network controller 42; a boot ROM 43 and an address PROM 44 which are connected to the bus and the network controller 42; an oscillator 46 and a transformer 45 which are connected to the network controller 42; a first port 4A which is connected to the bus and the transformer 45; a tranceiver 4B which is connected to the DC/DC converter 41 and transformer 45; a second port 49 which is connected to the tranceiver 4B; a filter 47 which is connected to the network controller 42; and a third port 48 which is connected to the filter 47.

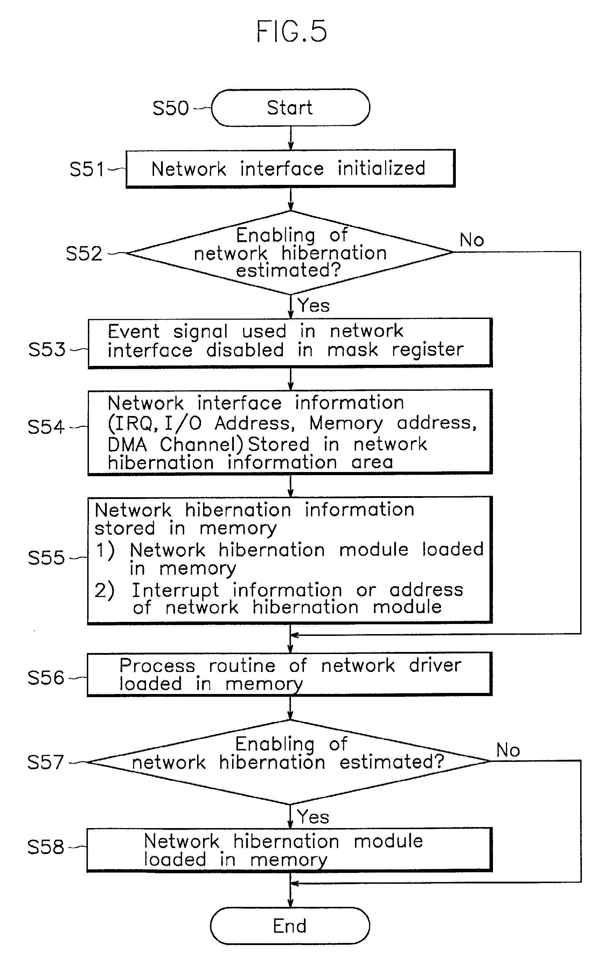

As shown in FIG.5, the loading process of the network hibernation module according to an embodiment of the invention comprises a step S50 in which the operation starts; a step S51 in which the network interface is initialized; a step S52 in which it is estimated whether the network hibernation is enabled; a step S53 in which the event signal used in the network interface is disabled in the mask register in case that the network hibernation is enabled; a step S54 in which the information of the network interface is stored in the network hibernation information area in memory; a step S55 in which the fact that the network hibernation module is loaded in the system and the interrupt information or the address of the network hibernation module are stored in the memory; a step S56 in which the process routine of the network driver is loaded in the memory; a step S57 in which it is estimated whether the network hibernation is enabled again; a step S58 in which the network hibernation module is loaded in the memory in case that the network hibernation is enabled; and a step S59 in which the operation is terminated.

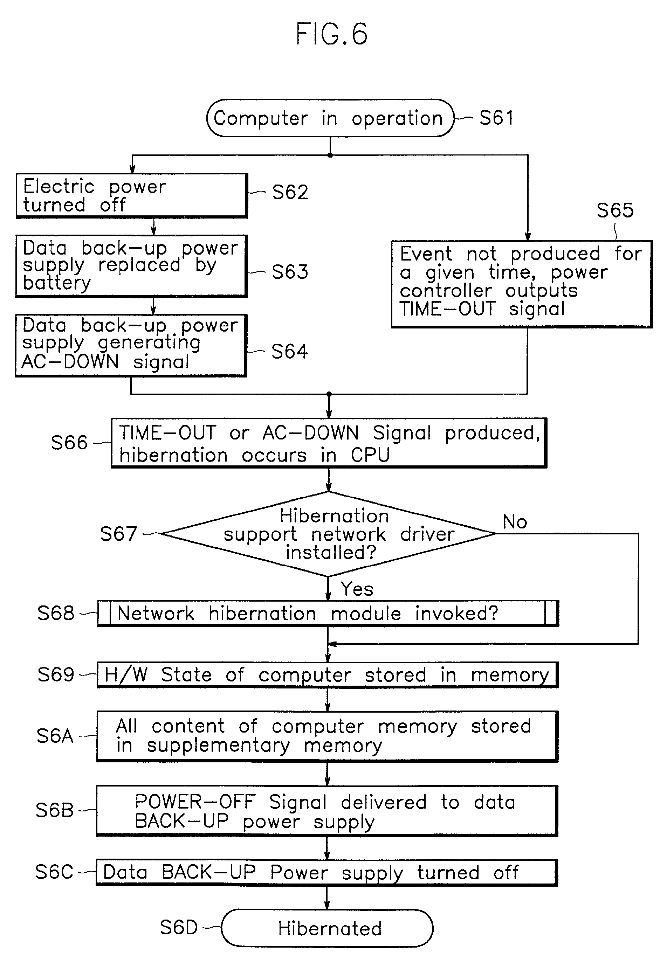

As shown in Fig.6, the suspend process of the hibernation module according to an embodiment of the invention comprises steps S61-S64 in which when the electric power is off during the operation of the computer, the power supply for backing up of data outputs the AC power supply interruption detecting signal with the power of the battery applied; a step S65 in which the power controller outputs time-out signal in case that the event is not produced for some time during the operation of the computer; a step S66 in which the hibernate interruption is produced in CPU in case that the AC power supply interruption signal or the time-out signal is produced; a step S67 in which it is estimated whether the hibernation support network driver is installed; a step S68 in which the network hibernation module is invoked in case that the hibernation support network driver is installed; a step S69 in which all the state of the hardware in the computer is stored in the present memory; a step S6A in which the content of every memory in the present computer is stored in the supplimentary memory; a step S6B in which the power interruption signal is outputted to the power supply for backing up of data; a step S6C in which the power supply for backing up of data cuts off the power; and a step S6D in which the computer reaches the hibernation state.

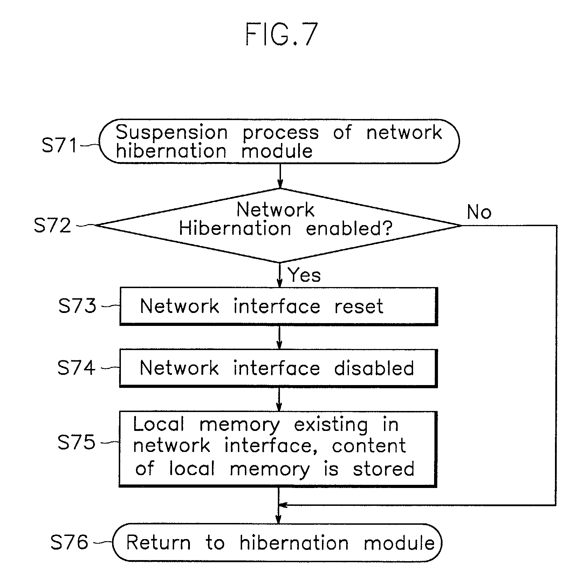

As shown in Fig.7, the suspend process of the network hibernation module according to an embodiment of the invention comprises a step S71 of invoking; a step S72 in which it is estimated whether the network hibernation is enabled; a step S73 in which the network interface is reset in case that the network hibernation is enabled; a step S74 in which the network interface is disabled; a step S75 in which the content of the local memory is stored in case that there is the local memory in the network interface; and a step S76 of returning to the hibernation module.

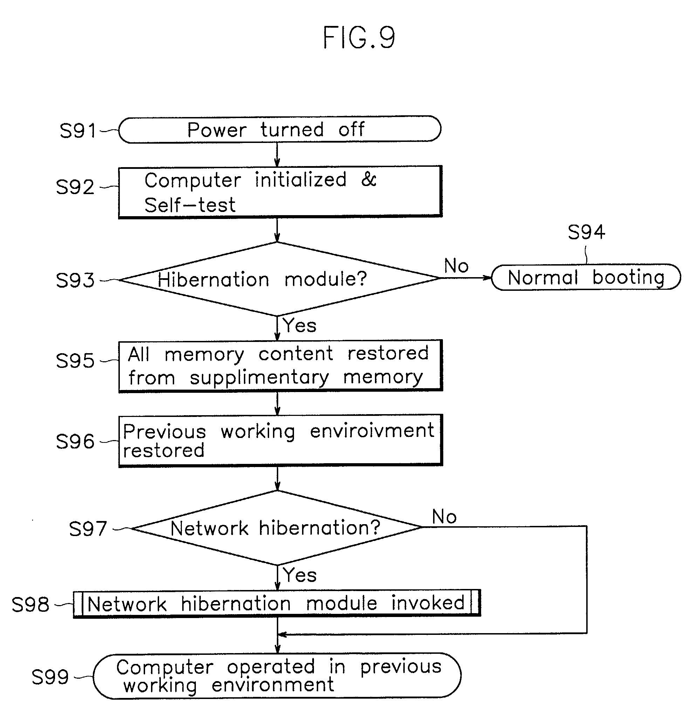

As shown in Fig. 9, the resuming process of the hibernation module according to an embodiment of the invention comprises a step S92 in which the initializing and self-examining of the computer is performed in the state S91 of power-off when the power is applied again; a step S93 in which it is estimated whether it is in the hibernation mode; a step S94 in which the normal booting process is performed in case of non-hibernation mode; a step S95 in which the content of all the memory is recovered from the supplimentary memory in case of the hibernation mode; a step S96 in which the working environment is recovered to the previous state before the power supply is off; a state S97 in which it is estimated whether it is in the network hibernation state is; a state S98 in which the network hibernation module is invoked in case of the network hibernation state; and a step S99 in which the computer operates in the state previous to the hibernation.

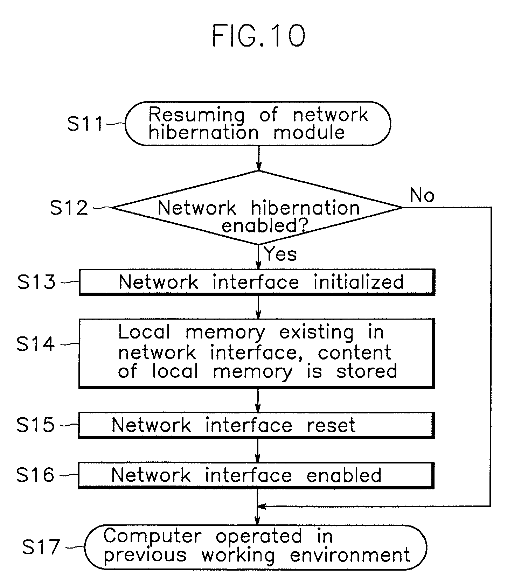

As shown in Fig. 10, the resuming process of the hibernation module according to an embodiment of the invention comprises a step S11 of invoking; a step S12 in which it is estimated whether the network hibernation is enabled; a step S13 in which the network interface is initialized in case that the network hibernation is enabled; a step S14 in which the content of the local memory is recovered in case there is the local memory in the network interface; a step S16 in which the network interface is enabled; and a step S17 of returning to the hibernation module.

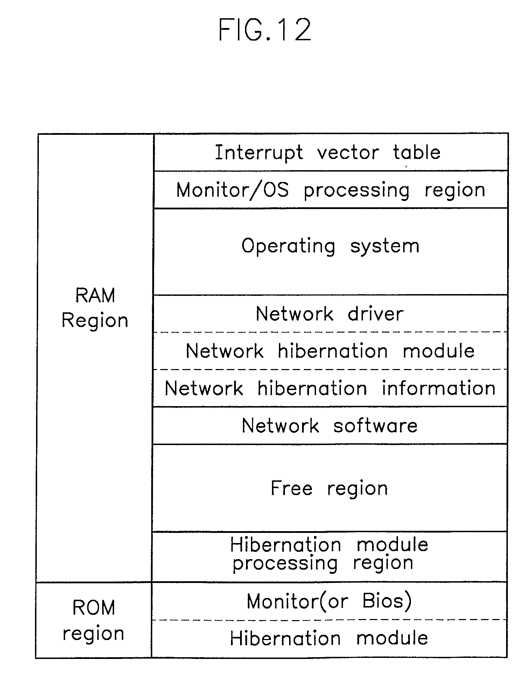

As shown in Fig. 12, the memory map of the RAM in the network hibernation system according to the embodiment of the invention comprises an interrupt vector area; a processing area of a monitor/operating system (OS); an operating system area; a network driver area; a network hibernation module area; a network hibernation information area; a network software area; a free space area; and a hibernation module processing area.

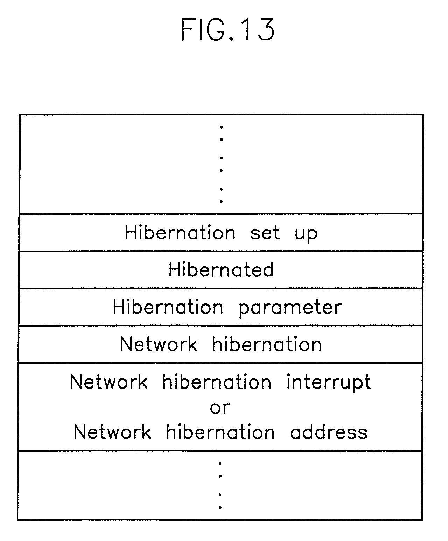

As shown in Fig. 13, the memory map in the network hibernation system according to an embodiment of the invention comprises a hibernation setting up area; a hibernation state area; a hibernation parameter area; a network hibernation area; and a network hibernation interrupt or a network hibernation address area.

The computer starts with its power on and the network hibernation system according to an embodiment of the invention operates by loading the network hibernation module with network driver module into the system memory.

The loading of the network hibernation module into the memory is shown in FIG.5 and is explained as follows :

At first, the CPU 11 in the controller 1 initializes the network interface and self-examines. In the second place, it is estimated whether the network hibernation is enabled by estimating the hibernation install flag in the nonvolatile memory 6.

In case the network hibernation is enabled, CPU 11 in the controller 1 disables the corresponding flag in the mask register 22 shown in FIG.3 to disable the event signal used in the network interface.

The reason for disabling the event signal is as follows:

Data is received continuously through the network interface 4 even when the network is not used once the network is connected to the computer.

By the way, since the network interface 4 produces interruption unconditionally at the time that data is received, the power controlling means 2 misinterprets the computer to be operated although the computer is not used.

Accordingly the power can be interrupted automatically when the computer is not used for sometime only after the network interface 4 disables the corresponding interruption (that is to say, the corresponding event signal) by using the mask register 22 shown in FIG.3. After the event signal is disabled, CPU 11 in controller 1 stores the corresponding information such as the interrupt signal used in the network interface, I/O address, direct memory access, memory information, etc. on the network hibernation area in the RAM area as shown in FIG. 12. Next, CPU 11 in controller 1 stores information relating to the network hibernation on the nonvolatile memory. At this time, the network hibernation interrupt vector should be added to or be changed in the interrupt vector table shown in FIG. 12 when the network hibernation is used.

The CPU 11 in the controller 1 terminates after the network driver module and the network hibernation module are installed in the system memory.

As described above, the suspend processes S67 and S68 of the hibernation module shown in Fig. 6 are called out and are performed by installing the network hibernation module on the memory if the interruption of electric power occurrs due to the abrupt interruption of the electric power or being not used for sometime while the controller 1 operates as a computer after the network hibernation system starts its operation.

If the power supply is interrupted during the operation due to the abrupt interruption of electric power, the power supply 3 for backing up of data produces AC power interruption detecting signal after the power supply is supplied to the system by a battery.

In case of the interruption of electric power, the overall operation of the power supply 3 for backing up of data which produces the AC power interruption detecting signal while the power supply is applied to the system by the battery is as follows :

If the power is applied to the power switch39 and linear converting rectifier 32 from the AC power supply 31, the power supply 3 for backing up of data starts its operation.

The circuit operation can be classified into four cases: a case (A) that the power supply is applied to and the power switch is turned on; a case (B) that the power supply is applied and the power switch is turned off; a case (C) that the power supply is not applied to by halting of the AC power supply 31 due to interruption of electric power or any carelessness; and a case (D) that the power supply is not applied and the power switch is turned on.

### (A) A case that the power supply is applied to and the power switch is turned on

In this case, AC power which is supplied from the AC power supply 31 is supplied to the main power supply 3A through the power switch 39 and the power supply 3A2 generates DC power of 5V and 12V after the AC power is rectified by the bridge rectifier 3A1 in the main power supply 3A.

The DC power generated makes the computer operate by being supplied to the expanded slot 3D to which the expanded card such as the system 3C, a video card, a music card, a fax/modem card, etc. is provided. Also, the AC power which is supplied from the AC power supply 31 is rectified to DC power by the diodes D31, D32 and the condensers C31, C32 after the voltage is decreased by the transformer TF in the linear converting rectifier.

The DC power of the linear converting rectifier 32 is supplied to the battery charger 33 so that the battery may be charged and a low level signal is outputted to the expanded slot interruptor 3B from the DC/DC converter by stopping the operation of DC/DC converter 38 by the DC converting controller 37 if the power supply state detector 35 estimates the state of the AC power as being normal.

If the low level signal is inputted from the DC/DC converter 38, the transistor Q in the expanded slot interruptor 3B is turned off and the FET is turned on and thus DC power of 5V is supplied from the power supply 3A2 to the expanded slot 3D.

### (B) the case that the power is applied and the power switch 39 is turned off

Because a user turns off the power switch 39, the main power supply 3A does not operate if the power of the AC power supply 31 is cut off. Also, the power of the AC power supply 31 is rectified to a DC power by the linear converting rectifier 32 and the rectified DC power is supplied to the battery charger 34 and thus the battery is charged. If the power supply state detector 35 estimates the state of the AC power as being normal, the power does not discharge from the battery 34 by halting the operation of DC/DC converter 38.

### (C) A case that the power supply is not applied and the power switch is turned-on

In this case as the case that the AC power supply 31 is turned off by the abrupt interruption of electric power or any mistake of a user during the operation of the computer, the main power supply 3A and the linear converting rectifier 32 stop their operation by the interruption of the AC power supply and thus the power applied to the system 3C and the extended slot 3D may be attenuated gradually. Also, because the linear converting rectifier 32 does not produce DC power, the battery charger 33 stops its operation.

At this time the power supply state detector 4 estimates the AC power as being normal and the power switch state detecter 5 estimates as the power switch 39 is turned on and thus the DC converting controller 37 produces a control signal to operate DC/DC converter 38.

At the same time the DC converting controller 37 outputs an AC power interruption detecting signal to the system 3C. The said system 3C means all composition except the power supply 3 for backing up of data in Fig. 1. If a control signal of the DC converting controller 37 is inputted to the DC/DC converter 38, the DC power 4 charged in the battery 3 is converted to DC power through the DC/DC power converter 38 and thereafter, is supplied to the output terminal of the bridge rectifier 3A1 of the main power supply 3A through the two diodes.

As shown in the above, the power supply 3A2 in the main power supply 3A is operated by the DC power supplied from DC/DC converter 38 and thus the attenuated output power of the power supply 3A2 ascends again.

Accordingly, the working environment can be backed up by the AC power interruption detecting signal inputted from DC converting controller 37 and the DC power of 5V and 12V supplied from the power supply 3A2 in the system 3C.

On the other hand,because the power charged in the battery 34 is not sufficient to operate the total system including the extended slot 3D, the transistor Q is turned on and the FET is turned off in the extended slot interruptor 3B by the AC power interruption detecting signal in order that the 5V DC power of the power supply 3A2 may not be supplied to the extended slot 3D.

### (D) the case that the power supply is not applied and the power switch 39 is turned off

In this case, because the AC power supply 31 is not connected and also the power switch 39 is turned off, the main power supply 3A and the linear converting rectifier 32 do not operate.

On the other hand, the power controller 2 produces the time-out signal in case the event signal is not inputted for sometime.

The constitution of the power controller 2 is explained with reference to Fig. 3 as follows :

The address decoder 21 decodes address to designate each register 22, 23, 26 from an address signal (ADRS) inputted from the address bus.

The mask register 22 and the first and second time register 23, 26 are selected by the address signal inputted from the address decoder 21, and at the time of setting up, the initial value is set up which is always outputted.

In mask register 22, the information which can mask the event signal is set up and in the first and second time registers, a reference time value is set up.

The counter 24 is reset as"0" when the logic product of the event signal and the content of the mask register 22 is "1" in the AND gate 28, that is, the interrupt signal is inputted from the peripheral equipment.

If the logic product of the event signal and the content of the mask register 22 is "0" in the AND gate 28, that is, the interrupt signal is not inputted from the peripheral equipment or the interrupt signal masked in the mask register 22 is inputted, the counter 24 keeps on counting. If the value of the counter 24 is the same as the value of the first time register 23, that is, the interrupt signal that is not masked in the mask register 22 is not inputted from the peripheral equipment during the reference time, the first comparator 25 outputs the time-out signal.

As shown in the above, the AC power interruption detecting signal outputted from the power supply 3 for backing up of data and the time-out signal outputted from the power supply controller 2 are inputted to the CPU 11 in the controller 1 through the OR gate and the system bus as the hibernation interrupt signal.

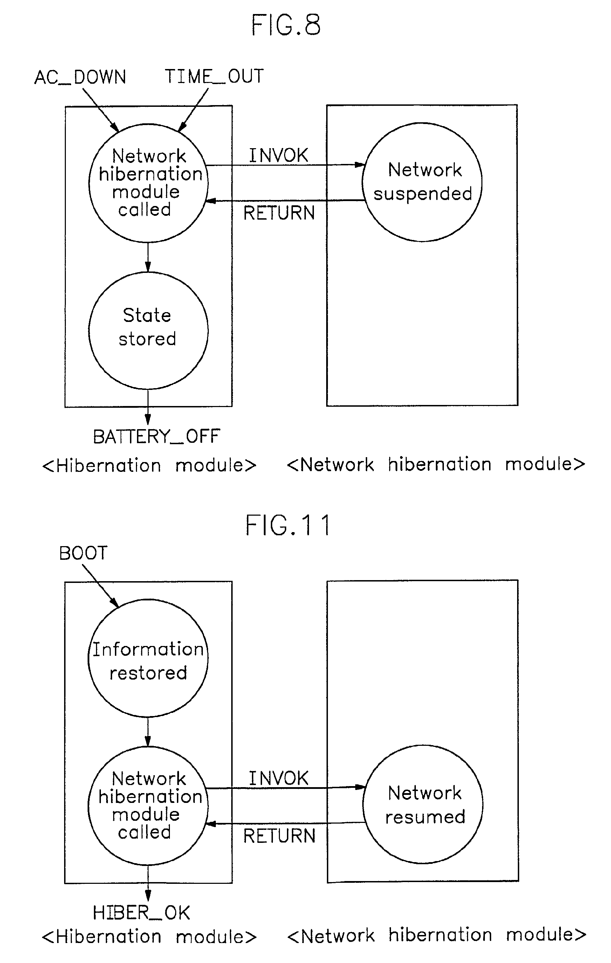

If the hibernation interrupt signal is inputted, the CPU 1 in the controller 1 estimates that the hibernation supporting network driver is installed and, in case that the hibernation supporting network driver is installed, invokes the suspend process of the network hibernation module as shown in FIG. 8.

If the suspend process of the network hibernation module is invoked, the suspend processes (S71 - S76) of the network hibernation module are performed as shown in FIG. 7.

At first, the CPU 11 in the controller 1 estimates that the network hibernation is enabled by estimating that the hibernation install flag of the nonvolatile memory 6 is enabled.

In case the network hibernation is enabled, the CPU 11 in the controller 1 resets the network interface 4 and thereafter, disables the network interface 4.

In this step, if the local memory remains in the network interface, its content is stored.

After the suspend process of the network hibernation module is performed, the computer returns to the hibernation module. In case the hibernation supporting network driver is not installed in this step or the computer returns from the suspend process of the network hibernation module as shown above, the CPU 11 in the controller 1 stores the present hardware state of the computer in the RAM 13 and then, all the contents of the memory in the present computer are stored in the supplimentary memory 5. Next, the CPU 11 in the controller 11 outputs the power interrupt signal to the power supply 3 for backing up of data. If the power interrupt signal is inputted, the power supply 3 for backing up of data interrupts the power of the battery 34 and power supply 3A2 and makes the computer go into the hibernation state.

As shown in the above, the operation of the power supply 3 for backing up of data which interrupts the battery power in case the power interrupt signal is inputted can be explained with reference to FIG.2 as follows :

If the power interrupt signal is inputted after the backing up of the working environment is terminated, the DC converting controller 37 stops the operation of the DC/DC converter. And thus, because the power of the battery 34 is cut off, the 5 V and 12V dc power may not be supplied. Also, if the power interrupt signal is inputted to the power supply 3A2, the application of the power is interrupted by the interruption of the power supply 3A2. On the other hand, if the power is applied again or data is inputted by a user in the hibernation state in which the power of the computer is turned off, the resume processes S93 -S99 of the hibernation module shown in FIG. 9 are called as follows :

If the power is applied again, the CPU 11 in the controller 1 initializes the computer and self-examines and thereafter, estimates whether it is in the hibernation mode.

If the state is not in the hibernation mode, the CPU 11 in the controller 1 boots the computer normally. But if the state is in the hibernation mode, the CPU 11 in the controller 1 recovers the working environment of the computer to the former state by storing all the contents of the memory in the RAM.

Next, the CPU 11 in the controller 1 estimates whether the state is in the network hibernation state by estimating whether the hibernation flag of the nonvolatile memory is enabled and invokes the resume process of the network hibernation module shown in FIG. 11 in case it is in the network hibernation state.

If the resume process of the network hibernation module is invoked, the resume processes S11-S17 of the network hibernation module are performed as follows :

At first, the CPU 11 in the controller 1 estimates whether the network hibernation is enabled. If the network hibernation is enabled, the CPU 11 in the controller 1 initializes the network interface 4. If there is the local memory in the network interface 4 in this step, its content is recovered.

Next, the CPU 11 in the controller 1 resets the network interface 4 and thereafter, enables the network interface 4.

After the resume process of the network hibernation module shown in the above is completed, the computer returns to the hibernation module.

If the computer returns from the resume process of the hibernation module, the CPU 11 in the controller 1 continues to operate the computer as in the former state of the hibernation.

As shown in the above, in an embodiment of the invention, if the power supply is interrupted abruptly and is turned on again in the computer under the network environment, the working environment can be recovered to the former state and also, if the computer does not operate for sometime in the network environment, the power supply is interrupted automatically, and thereafter, if the power supply is applied again, the computer recovers the former state so that the power consumed can be retrenched.

The effect of this invention can be utilized in the area of the computer which has automatic backing up function in an emergency and a retrenching function of the electric power.

## Claims

1. A suspend process of the network hibernation system comprising:
an initialising step (S51) in which a network interface is initialised when the operation is begun;
a disabling step (S53) in which an event signal is disabled in a mask register when network hibernation is enabled it is estimated whether the network hibernation is enabled;
a storing step (S54) in which network interface information is stored in a network hibernation information area in memory;
a storing step (S55) in which information representing the fact that the network hibernation module is loaded in the system and interrupt information in the network hibernation module or address are stored in the memory;
a loading step (S56) in which a process routine of a network driver is loaded in the memory; and
a step (S58) in which the network hibernation module is loaded in the memory when the network hibernation is enabled and thereafter, the operation is terminated.

2. A suspend process of a network hibernation system comprising:
a step in which a power supply, for backing up of data,outputs an AC (alternating current) interruption detection signal with the power of battery applied;
a step (S65) in which a power controller outputs a time-out signal when an event has occurred for sometime during the operation of the computer;
a step (S66) in which a hibernation interrupt occurs in a CPU and thereafter, it is estimated whether a hibernation supporting network driver is installed when said AC interruption detection signal and the time-out signal occur;
a step (S68) invoking a network hibernation module in case the hibernation support network driver is installed;
a step resetting a network interface in a case when it is estimated that the network hibernation is enabled, and then the network hibernation is enabled;
a step disabling the network interface and returning to the hibernation module after the content of local memory is stored in case there is a local memory in the network interface;
a step (S6A) storing all the contents in memory to a supplementary memory after all states of hardware in the present computer are stored;
a step (S6B) interrupting the power with the power supply for backing up of data by outputting a power-off signal to a power supply for backing up of data; and
a step (S6A) turning the computer to the hibernation state.

3. A resume process of the network hibernation system comprising;
a step (S92) initialising and self-examining the computer when power is applied again in a state of power-off;
a step (S94) recovering a working environment to a state previous to the power-off by normally booting in case it is not the hibernation mode and by recovering all the content of memory from a supplementary memory in case of hibernation mode after it is estimated whether it is in the hibernation mode;
a step (S95) invoking a network hibernation module in case of the network hibernation state after it is estimated whether it is in the network hibernation state;
a step (S13) initialising a network interface in case the network hibernation is enabled after it is estimated whether the network hibernation is enabled if the network hibernation module is invoked;
a step (S14) recovering the content of a local memory in case there is local memory in the network interface and resetting the network interface;
a step (S17)returning to the hibernation module after the network interface is enabled; and
a step operating the computer in the state previous to the hibernation.
